# EUROPEAN PATENT SPECIFICATION

(11) **EP 1 794 095 B1**
(45) Date of publication and mention of the grant of the patent: **14.10.2009**
(21) Application number: 05757621.7
(22) Date of filing: 04.07.2005
(51) Int. Cl.: C02F 9/00

(54) **WATER PURIFICATION APPARATUS**
WASSERREINIGUNGSAPPARATUR
APPAREIL DE PURIFICATION D'EAU

(30) Priority: 24.08.2004 GB 0418813
(43) Date of publication of application: 13.06.2007
(73) Proprietor: Sparkling Services Limited, Haddenham, Bucks HP17 8BZ (GB)
(72) Inventor: BRAITHWAITE, John, Brian Bullocks Farm, Buckinghamshire HP14 3AY (GB)
(74) Representative: Wilson, Glen
(86) International application number: PCT/GB2005/002620
(87) International publication number: WO 2006/021736

(56) References cited:
- US-A- 5 683 576
- US-A- 5 911 884

## Description

The present invention relates to water purification apparatus. Particularly, but not exclusively, the present invention relates to a water purification system using a gaseous sanitising means.

In many medium-to-large premises, it is common for water coolers to be present to provide potable water to persons using the premises. Typically, these coolers utilise a container of water as the reservoir. The coolers are typically rented from a supplier who also provides the service of supplying the filled water bottles, and removing the empty bottles.

To provide the water for the coolers, the water from a mains source must be further treated. Alternatively, providing the water meets the relevant standards of purity, the water is extracted directly from a natural spring and may or may not undergo further treatment.

To ensure that no foreign substances or harmful bacteria are introduced into the water, the supplier must also sanitise the containers for the water. Typically this is carried out in a separate process such as by the steam cleaning of the bottles.

There are considerable costs involved with the supply of the filled water bottles from the supplier. The filled and empty bottles must be transported between the customer and the supplier. It is advantageous to provide apparatus which allows the end user to sanitise and refill the water bottles.

WO 03/062155 discloses a water purification system which allows the filling of water bottles for water coolers. A liquid disinfectant, such as Aqua Dosa^{™}, is mixed with the water which is delivered to the bottle. The turbulence created during filling ensures that the disinfectant contacts the whole interior surface of the bottle to sanitise the bottle. Aqua Dosa^{™} breaks down to form water and oxygen, and so the final product is potable.

US 5 683 579 discloses a water purification system in which ozone is added together with the water in the bottle. The ozone in removed from the bottle by a degassing mechanism.

According to a first aspect of the present invention there is provided a water purification apparatus comprising:
a water source;
a dispenser for dispensing water to fill a container;
conduit means connected to the source and the dispenser for the transport of water from the source to the dispenser;
filter means interposed between the source and the dispenser for filtering the water that is dispensed to the container;
sanitising means for sanitising the container; and
delivering means for delivering the sanitising means to the container,
wherein the sanitising means comprises a gas, and wherein the delivering means delivers the sanitising means to the container prior to filling of the container.

Preferably the gas is expelled from the container during filling of the container. Preferably the sanitising means further comprises a conduit for collecting the expelled gas. Preferably the collecting conduit is provided adjacent to a top portion of the container. Collecting the gas at an upper location ensures that the gas acts to sanitise the entire interior surface of the container and also the outer rim of the inlet of the container.

Preferably a valve is provided at the collecting conduit such that the conduit is closed when the gas is being delivered to the container.

Preferably the gas is delivered to the container a predetermined period prior to filling of the container. Preferably the predetermined period is between 10 and 60 seconds, most preferably 30 seconds.

Preferably the gas comprises ozone. Preferably a filter is fluidly connected to the collecting conduit. Preferably the filter is a carbon filter for converting the ozone to oxygen. Preferably the collecting conduit has an outlet for releasing the oxygen to atmosphere. Preferably the outlet is provided at an elevated height such that it is substantially above the user.

Preferably the apparatus includes an ozone forming apparatus and the delivering means includes a pump for delivering the ozone to the container.

Preferably the water source is the mains supply system. Alternatively, the water source may comprise a tank and pressure means to urge the water from the source towards the dispenser.

Preferably the filter means comprises a main filter and an Ultra-Violet filter. Preferably the main filter is a chemical filter. Preferably the filter means further comprises a particulate filter. The particulate filter may be positioned before the main filter.

Preferably a non-return valve is interposed between the water source and the filter means to prevent water flowing from the filter means to the source. Preferably an isolating valve is also interposed between the water source and the filter means which, when actuated, prevents the flow of water in either direction between the filter means and the source. Preferably the dispenser comprises a tap valve.

Preferably the water purification apparatus further comprises control means. Preferably the control means comprises at least one sensor and the isolating valve may be actuated by a signal from the or each sensor. Preferably a dispenser sensor is provided such that the isolating valve is actuated when the container is full. Preferably at least one UV filter sensor is provided such that the isolating valve is actuated when UV filter failure is detected.

Preferably the water purification apparatus further comprises status indication means. Preferably, the signal from one or more sensors is connected to the status indication means. Preferably the water purification apparatus further comprises an electrical supply and the signal from the or each sensor is an electrical signal. Preferably the isolating valve is actuated in the event that the electrical supply is interrupted.

Preferably the water purification apparatus further comprises drainage means. Preferably water is directed through the filter means in a first direction. Preferably the control means is adapted to allow water from the source to be directed through the filter means and towards the drainage means in a second direction opposite to the first direction. Preferably the control means is further adapted to prevent filling of the container when water is directed in the second direction.

Preferably the water purification apparatus further comprises a flow meter for gauging the volume of water used by the system.

According to a second aspect of the present invention there is provided a method of purifying water comprising the steps of:
delivering sanitising means comprising a gas to the container;
directing water from a water source to a dispenser for dispensing water to fill the container via conduit means connected to the source and the dispenser; and
providing filter means interposed between the source and the dispenser for filtering the water that is dispensed to the container.

Preferably the gas is expelled from the container during filling of the container. Preferably the method includes collecting the expelled gas at a location adjacent to a top portion of the container.

Preferably the method includes delivering the gas to the container a predetermined period prior to filling of the container. Preferably the predetermined period is between 10 and 60 seconds, most preferably 30 seconds.

Preferably the gas comprises ozone. Preferably the method includes filtering the expelled ozone for converting the ozone to oxygen. Preferably the method includes releasing the oxygen to atmosphere at an elevated height such that it is substantially above the user.

An embodiment of the present invention will now be described by way of example only with reference to the accompanying drawings in which:
Fig. 1 is a front view of the water purification apparatus; and
Fig. 2 is a front view of a component of the apparatus of Fig. 1.

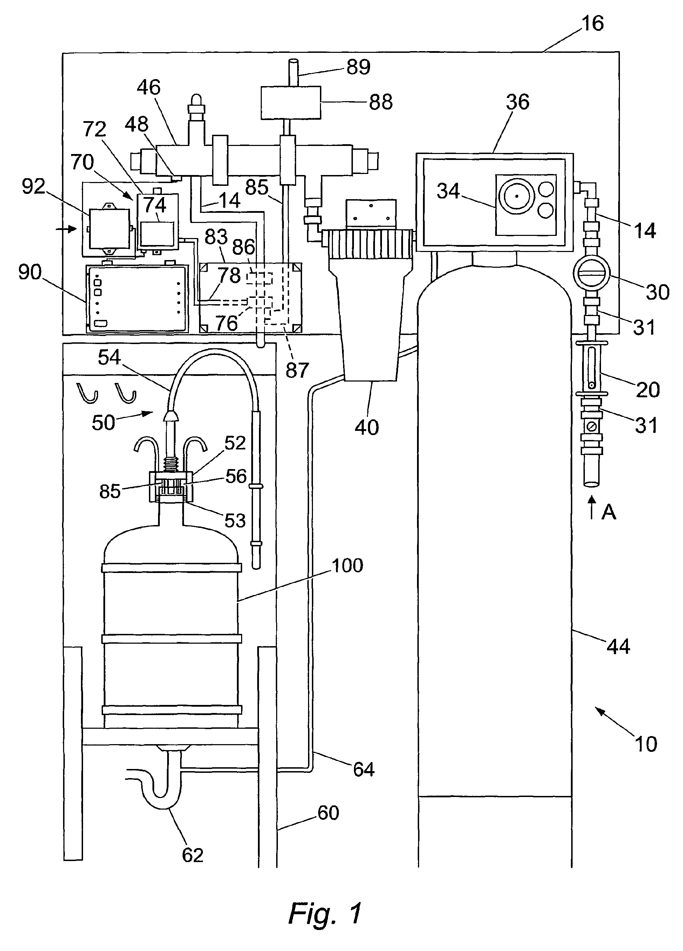

Referring to Fig. 1, water enters the purification system 10 from a source (not shown) and travels in a direction shown in the figure as 'A'. The water enters the system 10 under mains pressure, typically between 2 and 8 bar, and travels through the system 10 at a typical rate of 8 litres per minute. The water travels via pipe-work 14, typically having an internal diameter of 13 mm. However, any suitable conduit means can be used to convey the water.

The water first flows through a manual shut off valve 20. The water then passes through a flow meter 30 that measures the quantity of water used before entering a particulate filter 40. Both the manual shut off valve 20, the flow meter 30, and the particulate filter 40 are mounted on a main equipment board 16.

The particulate filter 40 is constructed of a wound nylon fabric and is adapted to remove particulates of a size of five microns or greater. Water exiting the particulate filter 40 then enters the main filter 44. Alternatively, the particulate filter 40 may be positioned after the main filter 44.

The main filter 44 is a chemical filter and has a 67 litre capacity. Due to the size of this filter 44, the main filter 44 is free standing. This filter 44 can remove a number of contaminates such as herbicides, pesticides, odours, and smaller particulates down to one micron is size. Water passing from the main filter 44 then enters a UV filter 46.

The UV filter 46 has a UV lamp which produces ultra-violet light. This is particularly effective in killing any infectious organisms including viruses. The UV filter 46 is mounted on the equipment board 16 and is powered by a power unit 49 connected to the electrical supply (described below). The filtered water then travels to the dispenser 50.

Although in the described example the filter means comprises three filters, it is to be understood that the filter means may comprise one, two, four or more separate filters.

The dispenser 50 comprises a stainless steel cap assembly 52 adapted to fit a conventional 19 litre water bottle 100 or other suitable container. The dispensing cap 52 is connected to the pipe-work 14 by an armoured hose line 54. The cap 52 fits around the neck of the bottle 100 and a seal 53 is provided at the connection between the cap 52 and bottle 100.

The water bottle 100 is positioned on top of a bottle rack 60 of stainless steel construction. The rack includes a drain 62 for any over-spill.

Connected to the pipe-work 14 between the filters 40, 44, 46 and the dispenser 50 is the container sanitising means 70. An ozone forming apparatus 72 is provided and comprises a commercially available ozonator which has been adapted to produce an ozone gas rather than ozone and water. The ozone forming apparatus 72 includes an internal pump 74.

Delivering means is provided to deliver the ozone gas to the water bottle 100 and this delivering means includes a portion of the pipe-work 14 used to transport the water. The pump 74 directs the ozone gas from the ozone forming apparatus 72 to a T-connector 76 connected to the pipe-work 14 via a conduit 78. It is to be appreciated that a common delivering means is used for both the water and the ozone gas.

A collecting conduit 86 is also connected to the dispensing cap 52 and a control valve 87 and carbon filter 88 are provided at the collecting conduit 86. When the control valve 87 is open, ozone gas can pass from the bottle 100 via the collecting conduit 86 and carbon filter 88 to an outlet 89 which is provided at a distance above the user. The carbon filter 88 converts the ozone gas to oxygen.

An electrically controlled isolating valve 86 is provided at the T-connector 76. The isolating valve 86 is adapted such that it is open only if it receives an electrical supply and is operated by the signal from a number of sensors (discussed below). The T-connector 76 and the isolating valve 86 are mounted within an enclosure 83.

Electrical power for the isolating valve 86 and other components, such as sensors, is provided by a transformer (not shown) connected to the main supply. This provides 24 volts dc. Circuit breakers (not shown) are provided to interrupt the electrical supply in the event of electrical spikes or other forms of irregular supply. The circuit breakers are mounted within a splash-proof enclosure 84.

The apparatus 10 also includes a number of sensors. A sensor is provided at the dispenser cap 52 for detecting when the bottle 100 is full. In such an event a signal is sent to the isolating valve 86 to close.

A sensor 48 is also provided at the UV filter 46 so that, in the event that the lamp fails, or any other circumstance which leads to no ultra violet light being produced, a signal is sent to the isolating valve 86 to close. The isolating valve 86 is arranged such that the valve 86 will fail safe, that is, it will close in the event of an interruption the electrical supply.

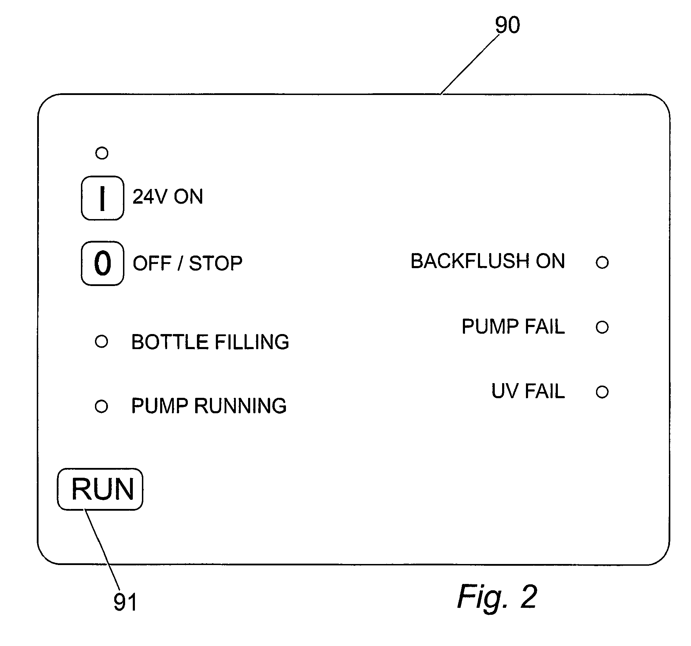

The signals from the sensors are connected to a display board 90 to inform the user of failure of any part of the system. The display board 90 is shown more clearly in Fig. 2. An operating switch 91 is provided on the display board 90 to allow the user to begin each filling cycle. The display board 90 is mounted on the face of the enclosure 84 housing the circuit breakers.

The operation of each filling cycle will now be described.

The user utilises the operating switch on the display board 90 to commence operation. Ozone gas is delivered to the bottle 100 such that the bottle 100 is substantially filled with ozone gas. The control valve 87 is closed. The ozone gas sanitises substantially the entire interior surface of the bottle 100.

After a predetermined period, such as 30 seconds, water is passed through the three filters 40, 44, 46 and the associated pipe-work 14 to the bottle 100. The control valve 87 is opened. The water expels the ozone gas from the bottle 100 as it is filled. Due to the construction of the dispensing cap 52 and seal, both the interior and exterior neck of the bottle 100 are also sanitised. The expelled gas is passed through the carbon filter 88 where it is converted to oxygen. The oxygen is released to atmosphere at an elevated height.

Once 19 litres of water has been dispensed, the dispenser sensor 56 will be activated. A signal will be sent for the isolating valve 86 to close. The display board 90 informs the user that the bottle 100 is completely filled. The user then removes the dispenser cap 52 and a self-sealing cap (not shown) is fitted to the bottle 100.

It should be appreciated that the system 10 allows the automatic filling and sanitising of the bottle 100 without requiring any further input from the user. This ensures that a bottle 100 cannot remain in a non-sanitised condition due to operator error.

To ensure that the system 10 continues to provide filtered water and a sanitised bottle 100 to an acceptable standard, servicing of the system 10 is carried out, typically every six months. During servicing, the UV bulb for the UV filter 48 and the media for the particulate filter 40 are changed. The pipe-work 14 for the filtering system can be sanitised using chlorinated water or ozone being passed through the system. The main filter 44 has a back flushing capability. Water is passed in the opposite direction to that during normal use. Water exiting the main filter is this case is directed to the drainage system 62 via a drain pipe 64. The media of the main filter 44 may be changed during every second servicing visit. Other checks during servicing may include the checking of the ozone forming apparatus 72, all pipes and joints, replacement of the parastelic pump tube, and the noting of meter readings. The meter readings can be used to adjust the back flushing of the main filter 44 to cope with the volume of water being used.

Variations and modifications can be made to the embodiment herein described without departing from the scope of the invention. For example, the conduit 78 for the ozone gas may not be connected to the pipe-work 14 for the water but may instead be dispensed directly to the bottle 100.

## Claims

1. A water purification apparatus (10) comprising:
a water source;
a dispenser (50) adapted to dispense water to fill a container (100);
conduit means (14) connected to the source and the dispenser (50) for the transport of water from the source to the dispenser (50);
filter means (44) interposed between the source and the dispenser (50) and adapted to filter the water that is dispensed to the container (100);
sanitising means (70) comprising a gas; and
delivering means adapted to deliver the sanitizing means (70) to the container (100),
**characterised in that** the sanitising means (70) is adapted to sanitise the container (100), and **in that** the delivering means is adapted to deliver the sanitizing means (70) to the container (100) prior to filling of the container (100).

2. A water purification apparatus (10) as claimed in Claim 1, wherein the apparatus (10) is adapted to expel the gas from the container (100) during filling of the container (100).

3. A water purification apparatus (10) as claimed in Claim 2, wherein the sanitizing means (70) further comprises a conduit (86) adapted to collect the expelled gas.

4. A water purification apparatus (10) as claimed in Claim 3, wherein the collecting conduit (86) is provided adjacent to a top portion of the container (100).

5. A water purification apparatus (10) as claimed in Claim 3 or 4, wherein a valve (87) is provided at the collecting conduit, the valve (87) being closable such that the conduit (86) is closed when the sanitising means is delivering the gas to the container (100).

6. A water purification apparatus (10) as claimed in any preceding claim, wherein the gas is delivered to the container (100) a predetermined period prior to filling of the container (100).

7. A water purification apparatus (10) as claimed in Claim 6, wherein the predetermined period is between 10 and 60 seconds.

8. A water purification apparatus (10) as claimed in any preceding claim, wherein the gas comprises ozone.

9. A water purification apparatus (10) as claimed in Claim 8, wherein a filter (88) is fluidly connected to the collecting conduit, the filter (88) being an active carbon filter adapted to convert the ozone to oxygen.

10. A water purification apparatus (10) as claimed in Claim 9, wherein the collecting conduit (86) has an outlet (89) adapted to release the oxygen to atmosphere.

11. A water purification apparatus (10) as claimed in Claim 10, wherein the outlet (89) is provided at an elevated height such that it is substantially above the user.

12. A water purification apparatus (10) as claimed in any of Claims 8 to 11, including an ozone forming apparatus (72), and wherein the delivering means includes a pump (74) adapted to deliver the ozone to the container (100).

13. A method of purifying water comprising the steps of:
delivering sanitizing means (70) comprising a gas to a container (100);
directing water from a water source to a dispenser (50) for dispensing water to fill the container (100) via conduit means (14) connected to the source and the dispenser (50); and
providing filter means (44) interposed between the source and the dispenser (50) for filtering the water that is dispensed to the container (100).
**characterised in that** the method includes sanitising the container (100) using the sanitizing means (70), and delivering the sanitizing means (70), to the container (100) prior to filling of the container (100).

14. A method of purifying water as claimed in Claim 13, wherein the gas is expelled from the container (100) during filling of the container (100).

15. A method of purifying water as claimed in Claim 14, including collecting the expelled gas at a location adjacent to a top portion of the container (100).

16. A method of purifying water as claimed in any of Claims 13 to 15, including delivering the gas to the container (100) a predetermined period prior to filling of the container (100).

17. A method of purifying water as claimed in Claim 16, wherein the predetermined period is between 10 and 60 seconds.

18. A method of purifying water as claimed in any of Claims 13 to 17, wherein the gas comprises ozone.

19. A method of purifying water as claimed in Claim 18, including filtering the expelled ozone for converting the ozone to oxygen.

20. A method of purifying water as claimed in Claim 19, including releasing the oxygen to atmosphere at an elevated height such that it is substantially above the user.

## Patentansprüche

1. Wasserreinigungsgerät (10) mit:
einer Wasserquelle;
einer Abfüllvorrichtung (50) zum Abgeben von Wasser zum Füllen eines Behälters (100);
einer Leitungseinrichtung (14), die mit der Quelle und der Abfüllvorrichtung (50) verbunden ist, für den Transport von Wasser von der Quelle zu der Abfüllvorrichtung (50);
einer Filtereinrichtung (44), die zwischen der Quelle und der Abfüllvorrichtung (50) angeordnet ist, zum Filtern des Wassers, das an den Behälter (100) abgegeben wird;
einem Desinfektionsmittel (70), welches ein Gas umfasst; und einer Fördereinrichtung zum Fördern des Desinfektionsmittels (70) zu dem Behälter (100),
**dadurch gekennzeichnet, dass** das Desinfektionsmittel (70) zum Desinfizieren des Behälters (100) dient und dass die Fördereinrichtung dafür ausgebildet ist, das Desinfektionsmittel (70) vor dem Füllen des Behälters (100) zu dem Behälter (100) zu fördern.

2. Wasserreinigungsgerät (10) nach Anspruch 1, wobei das Gerät (10) dafür ausgebildet ist, das Gas während des Füllens des Behälters (100) aus dem Behälter (100) auszustoßen.

3. Wasserreinigungsgerät (10) nach Anspruch 2, wobei die Fördereinrichtung weiter eine Leitung (86) umfasst, die dafür ausgebildet ist, das ausgestoßene Gas zu sammeln.

4. Wasserreinigungsgerät (10) nach Anspruch 3, wobei die Sammelleitung (86) in einem oberen Teil des Behälters (100) vorgesehen ist.

5. Wasserreinigungsgerät (10) nach Anspruch 3 oder 4, wobei ein Ventil (87) in der Sammelleitung vorgesehen ist und wobei das Ventil (87) schließbar ist, so dass die Leitung (86) geschlossen ist, wenn die Fördereinrichtung das Gas zu dem Behälter (100) fördert.

6. Wasserreinigungsgerät (10) nach einem der vorhergehenden Ansprüche, wobei das Gas eine bestimmte Zeitspanne vor dem Füllen des Behälters (100) zu dem Behälter (100) gefördert wird.

7. Wasserreinigungsgerät (10) nach Anspruch 6, wobei die vorbestimmte Zeitspanne zwischen 10 und 60 Sekunden beträgt.

8. Wasserreinigungsgerät (10) nach einem der vorhergehenden Ansprüche, wobei das Gas Ozon umfasst.

9. Wasserreinigungsgerät (10) nach Anspruch 8, wobei ein Filter (88) in Fluidverbindung mit der Sammelleitung ist und wobei der Filter (88) ein Aktivkohlefilter ist, der in der Lage ist, das Ozon in Sauerstoff umzuwandeln.

10. Wasserreinigungsgerät (10) nach Anspruch 9, wobei die Sammelleitung (86) einen Auslass (89) hat, der dafür vorgesehen ist, den Sauerstoff in die Atmosphäre freizusetzen.

11. Wasserreinigungsgerät (10) nach Anspruch 10, wobei der Auslass (89) in einer erhöhten Position vorgesehen ist, die sich im Wesentlichen oberhalb des Benutzers befindet.

12. Wasserreinigungsgerät (10) nach einem der Ansprüche 8 bis 11, mit einer Ozonbildungsvorrichtung (72), wobei die Fördereinrichtung eine Pumpe (74) umfasst zum Fördern des Ozons zu dem Behälter (100).

13. Verfahren zum Reinigen von Wasser, beinhaltend die Schritte:
Fördern eines Desinfektionsmittels (70), welches ein Gas umfasst, zu einem Behälter (100);
Leiten von Wasser von einer Wasserquelle zu einer Abfüllvorrichtung (50) zum Abgeben von Wasser zum Füllen des Behälters (100) über eine Leitungseinrichtung (14), die mit der Quelle und der Abfüllvorrichtung (50) verbunden ist; und
Bereitstellen einer Filtereinrichtung (44), die zwischen der Quelle und der Abfüllvorrichtung (50) angeordnet ist, zum Filtern des Wassers, das an den Behälter (100) abgegeben wird,
**dadurch gekennzeichnet, dass** das Verfahren beinhaltet, den Behälter (100) unter Verwendung des Desinfektionsmittels (70) zu Desinfizieren und das Desinfektionsmittel (70) vor dem Füllen des Behälters (100) zu dem Behälter (100) zu fördern.

14. Verfahren zum Reinigen von Wasser nach Anspruch 13, wobei das Gas aus dem Behälter (100) während des Füllens des Behälters (100) ausgestoßen wird.

15. Verfahren zum Reinigen von Wasser nach Anspruch 14, beinhaltend das Sammeln des ausgestoßenen Gases an einem Ort, der einem oberen Teil des Behälters (100) benachbart ist.

16. Verfahren zum Reinigen von Wasser nach einem der Ansprüche 13 bis 15, beinhaltend das Fördern des Gases zu dem Behälter (100) eine vorbestimmte Zeitspanne vor dem Füllen des Behälters (100).

17. Verfahren zum Reinigen von Wasser nach Anspruch 16, wobei die vorbestimmte Zeitspanne zwischen 10 und 60 Sekunden beträgt.

18. Verfahren zum Reinigen von Wasser nach einem der Ansprüche 13 bis 17, wobei das Gas Ozon umfasst.

19. Verfahren zum Reinigen von Wasser nach Anspruch 18, beinhaltend das Filtern des ausgestoßenen Ozons zum Umwandeln des Ozons in Sauerstoff.

20. Verfahren zum Reinigen von Wasser nach Anspruch 19, beinhaltend das Freisetzen des Sauerstoffs in die Atmosphäre in einer erhöhten Position, die sich im Wesentlichen oberhalb des Benutzers befindet.

## Revendications

1. Appareil de purification d'eau (10) comprenant :
une source d'eau ;
un distributeur (50) adapté pour distribuer l'eau afin de remplir un récipient (100) ;
des moyens formant conduit (14) raccordés à la source et au distributeur (50) pour le transport de l'eau de la source au distributeur (50) ;
des moyens formant filtre (44) intercalés entre la source et le distributeur (50) et adaptés pour filtrer l'eau qui est distribuée dans le récipient (100) ;
des moyens de désinfection (70) comprenant un gaz ; et
des moyens de distribution adaptés pour distribuer les moyens de désinfection (70) au récipient (100) ;
**caractérisé en ce que** les moyens de désinfection (70) sont adaptés pour désinfecter le récipient (100) et **en ce que** les moyens de distribution sont adaptés pour distribuer les moyens de désinfection (70) au récipient (100) avant le remplissage du récipient (100).

2. Appareil de purification d'eau (10) selon la revendication 1, dans lequel l'appareil (10) est adapté pour expulser le gaz du récipient (100) pendant le remplissage du récipient (100).

3. Appareil de purification d'eau (10) selon la revendication 2, dans lequel les moyens de désinfection (70) comprennent en outre un conduit (86) adapté pour collecter le gaz expulsé.

4. Appareil de purification d'eau (10) selon la revendication 3, dans lequel le conduit de collecte (86) est prévu de manière adjacente à une partie supérieure du récipient (100).

5. Appareil de purification d'eau (10) selon la revendication 3 ou 4, dans lequel un clapet (87) est prévu au niveau du conduit de collecte, le clapet (87) pouvant se fermer de sorte que le conduit (86) est fermé lorsque les moyens de désinfection distribuent le gaz au récipient (100).

6. Appareil de purification d'eau (10) selon l'une quelconque des revendications précédentes, dans lequel le gaz est distribué au récipient (100) pendant une période prédéterminée avant le remplissage du récipient (100).

7. Appareil de purification d'eau (10) selon la revendication 6, dans lequel la période prédéterminée est comprise entre 10 et 60 secondes.

8. Appareil de purification d'eau (10) selon l'une quelconque des revendications précédentes, dans lequel le gaz comprend de l'ozone.

9. Appareil de purification d'eau (10) selon la revendication 8, dans lequel un filtre (88) est raccordé de manière fluide au conduit de collecte, le filtre (88) étant un filtre à charbon actif adapté pour transformer l'ozone en oxygène.

10. Appareil de purification d'eau (10) selon la revendication 9, dans lequel le conduit de collecte (86) a une sortie (89) adaptée pour libérer l'oxygène dans l'atmosphère.

11. Appareil de purification d'eau (10) selon la revendication 10, dans lequel la sortie (89) est prévue à une hauteur élevée de sorte qu'elle est sensiblement au-dessus de l'utilisateur.

12. Appareil de purification d'eau (10) selon l'une quelconque des revendications 8 à 11, comprenant un appareil de formation d'ozone (72), et dans lequel les moyens de distribution comprennent une pompe (74) adaptée pour distribuer l'ozone au récipient (100).

13. Procédé pour purifier de l'eau, comprenant les étapes consistant à :
distribuer des moyens de désinfection (70), comprenant un gaz, à un récipient (100) ;
diriger l'eau d'une source d'eau à un distributeur (50) pour distribuer l'eau afin de remplir le récipient (100) via des moyens formant conduit (14) raccordés à la source et au distributeur (50) ; et
prévoir des moyens de filtre (44) intercalés entre la source et le distributeur (50) pour filtrer l'eau qui est distribuée au récipient (100),
**caractérisé en ce que** le procédé comprend l'étape consistant à désinfecter le récipient (100) en utilisant les moyens de désinfection (70) et l'étape consistant à distribuer les moyens de désinfection (70) au récipient (100) avant le remplissage du récipient (100).

14. Procédé pour purifier de l'eau selon la revendication 13, dans lequel le gaz est expulsé du récipient (100) pendant le remplissage du récipient (100).

15. Procédé pour purifier l'eau selon la revendication 14, comprenant l'étape consistant à collecter le gaz expulsé à un emplacement adjacent à une partie supérieure du récipient (100).

16. Procédé pour purifier de l'eau selon l'une quelconque des revendications 13 à 15, comprenant l'étape consistant à distribuer le gaz au récipient (100) pendant une période prédéterminée avant le remplissage du récipient (100).

17. Procédé pour purifier de l'eau selon la revendication 16, dans lequel la période prédéterminée est comprise entre 10 et 60 secondes.

18. Procédé pour purifier de l'eau selon l'une quelconque des revendications 13 à 17, dans lequel le gaz comprend de l'ozone.

19. Procédé pour purifier de l'eau selon la revendication 18, comprenant l'étape consistant à filtrer l'ozone expulsé pour convertir l'ozone en oxygène.

20. Procédé pour purifier de l'eau selon la revendication 19, comprenant l'étape consistant à libérer l'oxygène à l'atmosphère à une hauteur élevée de sorte qu'elle soit sensiblement au-dessus de l'utilisateur.
